# EUROPEAN PATENT APPLICATION

(11) **EP 4 428 178 A1**
(43) Date of publication of application: **11.09.2024**
(21) Application number: 22894095.3
(22) Date of filing: 27.01.2022
(51) Int. Cl.: C08G 69/46, C08G 69/26

(54) **POLYAMIDE RESIN, COMPOSITION, AND USE THEREOF IN ENGINEERING PLASTICS**

(30) Priority: 19.11.2021 CN 202111384712
(71) Applicant: Cathay Biotech Inc., Shanghai 201203 (CN); Cibt America Inc., Newark DE 19713 (US)
(72) Inventor: QIN, Bingbing, Shanghai 201203 (CN); ZHAO, Yuanbo, Shanghai 201203 (CN); GAO, Yuanyan, Shanghai 201203 (CN); LIU, Xiucai, Shanghai 201203 (CN)
(74) Representative: karo IP
(86) International application number: PCT/CN2022/074280
(87) International publication number: WO 2023/087547

(57) **Abstract**

The present disclosure provides a polyamide resin, a composition, and its use in engineering plastics. The polyamide resin comprises a diamine structural unit and a dicarboxylic acid structural unit, has a water extractables content of 0.7wt.% or less and a hypophosphite content of 10 ppm to 500 ppm in terms of P. The method for preparing the polyamide resin according to the present disclosure is simple, the process parameters are easy to control, no large equipment is required, and quantitative production is convenient. The polyamide resin composition has the advantages of short molding cycle, fast crystallization speed, good quality in appearance, and good corrosion resistance, etc, and it can be used in acidic environments, such as outer packaging and containers for acidic food, etc.

## Description

### Technical field

The present disclosure belongs to the field of polymer materials, and specifically relates to a polyamide resin and a preparation method therefor, a composition, and a fiber product.

### Background of Art

Polyamide has been widely used in materials for clothing, industrial materials, fibers, or general engineering plastics due to its excellent properties and ease of molten molding, and thus attracting extensive attention. Polyamide 5X is a linear long-chain macromolecule synthesized from a bio-based pentanediamine and a series of dicarboxylic acids. Since the amide bonds tend to form hydrogen bonds, polyamide 5X fibers have high strength and good hygroscopicity. During the polymerization of polyamide 5X, due to the occurrence of cyclization reaction, the polymer macromolecular chain will be broken into two segments during the amide group exchange reaction within the chain, or the linear low molecular substance will undergo direct dehydration reaction, resulting in the production of low molecular polymers. In general, the water extractables are low molecular polymers ranging from a monomer to a decamer, such as a dimer and a trimer, including linear and cyclic structures. The presence of these water extractables may affect the performance and application of the resin.

For example, for ultra-thin articles such as relays and capacitors (with a thickness of 0.3 mm to 0.4 mm), due to the articles are very thin, they are required for injection molding at high temperature and high speed, at which conditions the heating and shearing of the material itself are significantly higher than other injection molding conditions, and the occurrence of mold fouling is especially significant, which will lead to the requirement for regularly cleaning the mold surface during the continuous processing, resulting in low production efficiency. Moreover, in severe cases, problems such as white spots, etc., may even appear on the surface of the articles, seriously affecting the appearance of the product.

### Summary of the invention

In order to address the shortcomings of the technologies and products of the prior art, one of the objects of the present disclosure is to provide a polyamide resin.

The polyamide resin comprises a diamine structural unit and a dicarboxylic acid structural unit, has a water extractables content of 0.7 wt.% or less, and a hypophosphite content of 10 ppm to 500 ppm in terms of P.

According to some embodiments of the present disclosure, the water extractables content is 0.6 wt.% or less, preferably 0.5 wt.% or less. The water extractables are mainly oligomers produced from monomer raw materials during the polymerization process, such as linear or cyclic monomers to decamers.

In some preferred embodiments of the present disclosure, when the water extractables content falls within the range as defined above, the yellowing resistance of the polyamide resin and the resin composition comprising the same mentioned below is improved.

In some preferred embodiments of the present disclosure, when the water extractables content falls within the range as defined above, the mechanical properties of the polyamide resin and the resin composition comprising the same mentioned below is improved.

In some preferred embodiments of the present disclosure, when the water extractables content falls within the range as defined above, the polyamide resin and the resin composition comprising the same mentioned below have good appearance quality and no obvious precipitation.

In some preferred embodiments of the present disclosure, when the water extractables content falls within the range as defined above, the resistance to acid corrosion of the polyamide resin and the resin composition comprising the same mentioned below is improved.

In some preferred embodiments of the present disclosure, the polyamide resin has a water extractables content of 0.05 wt.% or more, preferably 0.1 wt.% or more, more preferably 0.2 wt.% or more, and even more preferably 0.25 wt.% or more. When the water extractables content is below the range as defined above, the performance of the polyamide resin and the composition comprising the same mentioned below is reduced to some extent.

The water extractables content of the polyamide resin is the percentage of the mass of components that can be extracted into water after the extraction treatment to the mass of polyamide resin before the extraction treatment when the polyamide resin is heated in deionized water for extraction treatment (e.g., when the polyamide resin is extracted with water at 97°C to 100°C for 24 hours).

Water extractables content (%) = [(mass of polyamide resin before water extraction (m₁) - mass of polyamide resin after water extraction (m₂))/mass of polyamide resin before water extraction (m₁)] × 100%.

The extraction conditions, for example, include using water at 97°C to 100°C to extract polyamide resin for 24 hours, and the mass ratio of polyamide resin to water is 1 : 48 ~ 51, e.g., 1 : 50.

Further, a method for measuring the water extractables content is as follows: a polyamide resin sample is dried in an air drying oven at 130°C for 7 hours, then sealed in an aluminum plastic bag and placed in a dryer for cooling, after which about 2 g of the polyamide resin sample is weighed and the actual mass (m₁) is recorded; the polyamide resin sample is placed in a 250 mL round-bottom flask, 100 mL of deionized water is added, and the resulting mixture is heated to reflux at 97°C to 100°C for 24 hours to extract the polyamide resin sample with water, then the polyamide resin sample is removed from water and washed three times with deionized water, then the polyamide resin sample is dried in an air drying oven at 130°C for 7 hours; after which the polyamide resin sample is transferred to an aluminum plastic bag which is weighed beforehand, and sealed in the aluminum plastic bag and then placed in a dryer for cooling, the total weight of the aluminum plastic bag and the polyamide sample as well as the weight of the aluminum plastic bag are weighed, respectively, and the latter was subtracted from the former to obtain the weight of the polyamide sample after water extraction (m₂). The water extractables content is calculated from the difference between weights of the polyamide sample before and after water extraction. Water extractables content (%) = [(m₁-m₂)/m₁] × 100%.

Further, when measuring the water extractables content of a polyamide resin melt, the melt is introduced into a closed container, cooled, then sampled and measured according to the above method.

According to some embodiments of the present disclosure, the water extractables have a number average molecular weight of 200 g/mol to 2,000 g/mol as determined by the GPC method.

According to some embodiments of the present disclosure, the water extractables include one or two of the following structures: 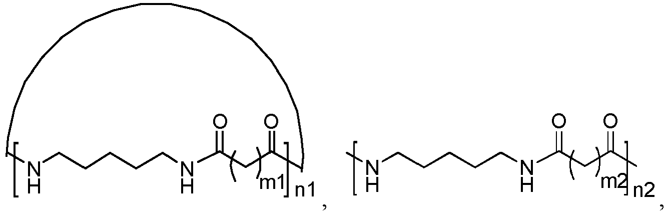 wherein, n1 and n2 are independently selected from an integer from 1 to 8, preferably n1 and n2 are independently selected from an integer from 1 to 6, more preferably n1 and n2 are independently selected from an integer from 1 to 5, further preferably n1 is 2, 3 or 4, n2 is 2, 3, 4 or 5, m1 is 4 and m2 is 4.

In a preferred embodiment of the present disclosure, hypophosphite is included in a content of 10 ppm to 300 ppm, and preferably 10 ppm to 200 ppm, in terms of P.

In a preferred embodiment of the present disclosure, hypophosphite includes alkali metal hypophosphites and alkaline-earth metal hypophosphites, preferably includes any one of sodium hypophosphite, potassium hypophosphite, calcium hypophosphite, and magnesium hypophosphite or a combination of two or more of the above.

According to some embodiments of the present disclosure, the pentanediamine structural unit in the polyamide resin can be from chemically derived pentanediamine or biologically derived pentanediamine, and preferably biologically derived 1,5-pentanediamine.

In a preferred embodiment of the present disclosure, 90 mol% or more of the dicarboxylic acid structural unit is derived from adipic acid, and 90 mol% or more of the diamine structural unit is derived from 1,5-pentanediamine.

In a preferred embodiment of the present disclosure, 95 mol% or more, preferably 97 mol% or more of the diamine structural unit in the polyamide resin is derived from 1,5-pentanediamine.

Further, the diamine structural unit in the polyamide resin may further include one or more structural units derived from butanediamine, hexanediamine, decanediamine and dodecanediamine.

In a preferred embodiment of the present disclosure, 95 mol% or more, preferably 97 mol% or more of the dicarboxylic structural unit in the polyamide resin is derived from adipic acid.

According to some embodiments of the present disclosure, the dicarboxylic acid structural unit in the polyamide resin may further include one or more structural units derived from succinic acid, glutaric acid, pimelic acid, suberic acid, azelaic acid, decanedioic acid, undecandioic acid, dodecanedioic acid, tridecanedioic acid, tetradecandioic acid, pentadecandioic acid, hexadecanedioic acid, heptadecanedioic acid, octadecandioic acid, terephthalic acid, isophthalic acid and phthalic acid.

In a preferred embodiment of the present disclosure, the content of polyamide composed of diamine structural unit and dicarboxylic acid structural unit (main polymer) in the polyamide resin is 90 wt.% or more, preferably 95 wt.% or more, more preferably 97 wt.% or more, and even more preferably 99 wt.% or more. The diamine structural unit and the dicarboxylic acid structural unit are defined as above.

According to some embodiments of the present disclosure, the polyamide resin contains an additive in addition to hypophosphite.

The additive includes but is not limited to any one of an end capping agent, a nucleating agent, an antioxidant, a defoamer, and a flow modifier, or a combination of two or more thereof. The end capping agent includes lauric acid, stearic acid, benzoic acid and acetic acid.

In some preferred embodiments of the present disclosure, an additive in the polyamide resin is present in a content of less than or equal to 10 wt.%, preferably less than or equal to 5 wt.%, more preferably less than or equal to 3 wt.%, and even more preferably less than or equal to 1 wt.%.

According to some embodiments of the present disclosure, the polyamide resin is polyamide 56 resin. The polyamide 56 resin has a polyamide 56 content of 90 wt.% or more, further 95 wt.% or more, further 97 wt.% or more, and further 99 wt.% or more.

In a preferred embodiment of the present disclosure, the polyamide resin has a relative viscosity of 1.8 to 4.0, preferably 2.2 to 3.5, and further preferably 2.4 to 3.3.

In a preferred embodiment of the present disclosure, the polyamide resin has a yellow index of less than 7, preferably less than 5, and further preferably less than 4.2.

A second object of the present disclosure is to provide a method for preparing the polyamide resin.

According to some embodiments of the present disclosure, the method comprises the following steps:
S1, preparing a nylon salt solution in an inactive gas atmosphere;
S2, heating the nylon salt solution to raise the pressure of the nylon salt solution reaction system to 0.5 to 2.5 MPa, and maintaining the pressure by degassing for 0.5 to 4 hours, and then depressurizing to reduce the pressure inside the reaction system to 0 to 0.7 MPa (gauge pressure), then vacuumizing the reaction system to a vacuum degree of -0.01 to -0.08 MPa to obtain a polyamide melt; and
S3, discharging the polyamide melt, carrying out strand pelletizing to obtain polyamide chips.

Unless otherwise stated or apparently being contradictory, the pressure referred to in the present disclosure refers to gauge pressure. In the present disclosure, the nylon salt and the polyamide salt can be used interchangeably.

Among them, in step S1, 1,5-pentanediamine and dicarboxylic acid are used for preparing the nylon salt solution at a molar ratio of (1 ~ 1.1) : 1.

In step S2, the temperature of the reaction system is 232°C to 260°C at the end of pressure maintenance.

In step S2, the temperature of the reaction system is 240°C to 295°C, and further 243°C to 288°C at the end of depressurization.

In step S2, the temperature of the reaction system after the vacuumization is 250°C to 290°C, and further 252°C to 285°C.

In step S2, the vacuum degree is maintained for a time period of 11 to 75 minutes after the vacuumization.

In step S3, the strand pelletizing is carried out in water at a water temperature of 15°C to 50°C to obtain polyamide chips or polyamide pellets.

According to some embodiments of the present disclosure, the method further comprises the following steps:
S4, mixing the polyamide chips with water in a reactor to obtain a mixture, then replacing the air in the reactor with an inactive gas; and
S5, in an inactive gas atmosphere, heating and filtering the mixture, rinsing and/or drying the polyamide chips to obtain the polyamide resin.

In step S4, the reactor is one that can be formed into a closed environment. In step S4, the reactor can be, for example, a continuous extraction column or a batch reactor.

Preferably, in step S4, the air in the reactor can be replaced using a vacuum pump to vacuumize the reactor and then refilling it with nitrogen gas or an inert gas. The above operation for replacing the air in the reactor can be repeated twice or more.

In step S4, the water is deionized water, and further deionized water undergone deoxygenation treatment, wherein the deoxygenation treatment can be one of thermal deoxygenation, ultrasonic deoxygenation, vacuum deoxygenation, chemical deoxygenation, decomposition deoxygenation, or any other deoxygenation methods, or a combination of two or more thereof. In some preferred embodiments, after the deoxygenation treatment, the deionized water has a dissolved oxygen content of less than or equal to 0.5 mg/L, and further less than or equal to 0.1 mg/L.

In step S4, the water is used in a mass of 1 fold or more, preferably 2 folds or more, for example 1 to 12 folds, 1 to 10 folds, 2 to 10 folds, 2 to 6 folds, 1.5 folds, 2.3 folds, 2.5 folds, 3 folds, 5 folds, or 8 folds of that of the polyamide chips.

In step S1, step S4 and step S5, the inactive gas includes one or two of argon gas, and helium gas, etc., and further preferably high-purity argon gas, and high-purity helium gas.

According to some embodiments of the present disclosure, replacing the air in step S4 is carried out as follows: the reactor is vacuumized to a vacuum degree of -0.1 MPa to -0.001 MPa (gauge pressure) and held for 5 to 20 minutes, then refilled with nitrogen gas or an inert gas, and further preferably the operation for replacing the air is repeated for 5 to 15 times, further preferably 8 to 10 times.

According to some embodiments of the present disclosure, in step S5, the mixture is heated for 4 to 50 hours, and preferably 8 to 45 hours.

According to some embodiments of the present disclosure, in step S5, the mixture is heated at a temperature of 80°C to 140°C, and preferably 85°C to 120°C.

According to some embodiments of the present disclosure, the rinsing in step S5 is carried out with hot water at a temperature of 50°C to 100°C.

According to some embodiments of the present disclosure, the drying in step S5 is carried out by one or more of vacuum drying, freeze-drying, airflow drying, microwave drying, infrared drying and high-frequency drying.

A third object of the present disclosure is to provide a resin composition comprising the following components in parts by weight: 100 parts of polyamide resin and 10 to 70 parts of glass fiber.

In a preferred embodiment of the present disclosure, the glass fiber has a length to diameter ratio of (2 ~ 800) : 1, and further (200 ~ 650) : 1.

In a preferred embodiment of the present disclosure, the glass fiber has a length of 3 mm to 12 mm, and preferably 3 mm to 8 mm.

In some preferred embodiments of the present disclosure, when the glass fiber has parameters within the range as defined above, the mechanical properties of the resin composition is improved.

Further, the composition may comprise any one of an antioxidant, a nucleating agent, a lubricant, a flame retardant, a coupling agent, a heat stabilizer, a light stabilizer, an antistatic agent, a ultraviolet absorbent, and a colorant, or a combination of two or more of the above.

Further, the antioxidant is present in an amount of 0.02 to 2 parts by weight, and the antioxidant preferably includes a hindered phenolic antioxidant, a hindered amine antioxidant, and a phosphite antioxidant, such as any one of antioxidant 168, antioxidant 1098, antioxidant 1010, and antioxidant S9228, or a combination of two or more of the above.

In a preferred embodiment of the present disclosure, in the acid resistance test, there is no or only a small amount of precipitates (floating fibers) on the surface of the resin composition.

In a preferred embodiment of the present disclosure, there is no apparent mold fouling or only a small amount of mold fouling after injection molding of the resin composition.

In a preferred embodiment of the present disclosure, the polyamide resin is defined as above.

A method for preparing the polyamide resin composition comprising the following steps:
the components are added to a twin-screw extruder for mixing, then extruded from the twin-screw extruder, cooled and pelletized to obtain the polyamide composition.

Further, during mixing, the glass fibers are fed from the side feeding port of the twin-screw extruder.

Further, the components are mixed and melt in the twin-screw extruder at a temperature of 210°C to 290°C.

In an embodiment of the present disclosure, during mixing, the twin-screw extruder adopts a seven-zone heating mode, with a temperature of zone 1 being 210°C to 250°C, and/or a temperature of zone 2 being 210°C to 250°C, and/or a temperature of zone 3 being 240°C to 260°C, a temperature of zone 4 being 260°C to 280°C, and/or a temperature of zone 5 being 270°C to 290°C, and/or a temperature of zone 6 being 270°C to 290°C, and/or a temperature of zone 7 being 255°C to 285°C; wherein, the direction from zone 1 to zone 7 is the direction from the feeding port to the die.

The die temperature of the twin-screw extruder is from 260°C to 275°C.

The screw speed of the twin-screw extruder is 350 r/min to 500 r/min.

The twin-screw extruder has a D/L ratio (Diameter to length ratio) of 1 : (30 ~ 50), preferably 1 : 40.

A fourth object of the present disclosure is to provide use of the aforementioned polyamide resin or composition in engineering plastics.

The present disclosure has at least the following advantages over prior art:
1. The method for preparing the polyamide resin according to the present disclosure is simple, the process parameters are easy to control, no large equipment is required, and quantitative production is convenient.
2. The polyamide resin composition has the advantages of short molding cycle, fast crystallization speed, less mold fouling in injection molding, and good quality in appearance. Therefore, it can be applied to the devices of electrical and electronic fields.
3. The polyamide resin composition has the advantage of acid corrosion resistance and can be used in acidic environments, such as outer packaging and containers for acidic food, etc.

### Detailed description

In order to make the objects, technical solutions, and advantages of the present disclosure clearer, the technical solutions in the embodiments of the present disclosure will be clearly and completely described below in conjunction with the embodiments of the present disclosure. Obviously, the embodiments described are only a part of the embodiments of the present disclosure rather than all of the embodiments. Based on the embodiments of the present disclosure, all other embodiments which can be achieved by those skilled in the art without creative work fall within the scope of protection of the present disclosure.

### 1. Method for determining relative viscosity ηr

Concentrated sulfuric acid method using a Ubbelohde viscometer: 0.5±0.0002 g of dried polyamide resin sample is accurately weighed and dissolved by adding 50 mL of concentrated sulfuric acid (98%), the flow time of concentrated sulfuric acid (t₀) and the flow time of polyamide resin solution (t) are measured and recorded in a water bath at a constant temperature of 25°C. Calculation formula of relative viscosity: Relative viscosity ηr = t/t₀.

### 2. Method for measuring water extractables content of polyamide resin

Each polyamide resin sample is dried in an air drying oven at 130°C for 7 hours, then sealed in an aluminum plastic bag and placed in a dryer for cooling, after which about 2 g of the polyamide resin sample is accurately weighed as the actual mass (m₁). The weighed polyamide resin sample is placed in a 250 mL round-bottom flask, 100 mL of deionized water is added, and the resulting mixture is heated to reflux at 97°C to 100°C for 24 hours to extract the polyamide resin sample with water, and then the polyamide resin sample is removed and washed three times with deionized water, and then the polyamide resin sample is dried in an air drying oven at 130°C for 7 hours. The polyamide resin sample is transferred to an aluminum plastic bag which is weighed beforehand, and sealed in the aluminum plastic bag and placed in a dryer for cooling, the total weight of the aluminum plastic bag and the polyamide resin sample as well as the weight of the aluminum plastic bag are weighed, respectively, and the latter is subtracted from the former to obtain the weight of the polyamide resin sample after water extraction (m₂). The water extractables content is calculated from the difference between weights of the polyamide sample before and after water extraction. Water extractables content (%) = [(m₁-m₂)/m₁] × 100%.

When measuring the water extractables content of polyamide resin melt, the melt is introduced into a closed container, cooled, and then sampled and measured according to the above method.

### 3. Yellow Index (YI)

Yellow Index is tested according to HG/T 3862.

### 4. Crystallinity test

Each polyamide resin sample is subjected to crystallinity analysis using differential scanning calorimetry (DSC): each polyamide resin sample obtained from examples and comparative examples is heated from room temperature to 280°C at a heating rate of 50°C/min, held at 280°C for 3 minutes, and then the sample is cooled to room temperature at a rate of 10°C/min to obtain crystallization temperature and half-crystallization time.

### 5. Tensile strength

Tensile strength is tested according to ISO 527-2 at a tensile speed of 50 mm/min.

### 6. Bending strength

Bending strength is tested according to ISO 178 at a rate of 2 mm/min.

### 7. Acid resistance test

Each polyamide resin sample is soaked in a 10 wt.% of acetic acid solution at 40°C for 180 days, precipitates on the surface of each samples are observed and graded from 1 to 5, wherein grade 1 is the worst as a large amount of precipitates occur, and grade 5 is the best as no obvious precipitates occur.

### Preparation example 1

(1) Under a nitrogen gas condition, 1,5-pentanediamine, adipic acid and water were mixed uniformly at a molar ratio of 1,5-pentanediamine to adipic acid of 1.08 : 1 to prepare a 60 wt.% (where the percentage is the mass percentage of the nylon salt solution) of nylon salt solution; the nylon salt solution was sampled, and diluted to a concentration of 10 wt.%, at which point the pH value was 7.85.
(2) 1200 g of the nylon salt solution and 500 ppm of sodium hypophosphite were added to a polymerization reactor and heated to raise the pressure inside the reaction system to 2.3 MPa in 1.5 hours, then the pressure was maintained for 3 hours by degassing, at the end of the pressure maintaining process, the temperature of the reaction system was 245°C, then the pressure inside the reaction system was depressurized to 0.003 MPa (gauge pressure) in 1 hour, after the completion of depressurization, the temperature of the reaction system was 273°C. The reaction system was vacuumized for 32 minutes and maintained at a vacuum degree of -0.06 MPa, the temperature of the reaction system after vacuumization was 272°C to give polyamide 56 melt.
(3) The melt obtained in step (2) was discharged and subjected to strand pelletizing under water cooling at a water temperature of 20°C to obtain polyamide 56 chips.

### Example 1

(a) The polyamide 56 chips prepared in Preparation example 1 and deoxidized deionized water were added to a reactor at a mass ratio of the chips to deoxidized deionized water of 1 : 6. The air in the reactor was replaced with nitrogen gas as follows: the reactor was vacuum pumped to a vacuum degree of -0.09 MPa (gauge pressure), held at this vacuum degree for 10 minutes, then refilled with nitrogen gas and the nitrogen gas replacement was repeated 9 times.
(b) Under a nitrogen gas atmosphere, the resulting mixture was heated at 90°C for 32 hours, then filtered to separate the chips from water, and the resulting chips were rinsed with water at 95°C, and then vacuum dried at 105°C for 15 hours to obtain polyamide 56 resin.

### Example 2

(1) Under a nitrogen gas condition, 1,5-pentanediamine, adipic acid and water were mixed uniformly at a molar ratio of 1,5-pentanediamine to adipic acid of 1 : 1 to prepare a 70 wt.% (where the percentage is the mass percentage of the nylon salt solution) of nylon salt solution; the nylon salt solution was sampled and diluted to a concentration of 10 wt.%, at which point the pH value was 7.96.
(2) 1200 g of the nylon salt solution and 300 ppm of sodium hypophosphite were added to a polymerization reactor and heated to raise the pressure inside the reaction system to 2.0 MPa in 1.5 hours, then the pressure was maintained at 2.40 MPa for 3 hours by degassing, at the end of the pressure maintaining process, the temperature of the reaction system was 243°C, then the pressure inside the reaction system was depressurized to 0.005 MPa (gauge pressure) over 1 hour, after the completion of depressurization, the temperature of the reaction system was 290°C. The reaction system was vacuumized for 30 minutes and maintained at a vacuum degree of -0.08 MPa, the temperature of the reaction system after vacuumization was 290°C to obtain polyamide 56 melt.
(3) The melt obtained in step (2) was discharged and subjected to strand pelletizing under water cooling at 20°C to obtain polyamide 56 chips.
(4) The polyamide 56 chips and deoxidized deionized water were added to a reactor at a mass ratio of the chips to deoxidized deionized water of 1 : 6. The air was replaced with nitrogen gas as follow: the reactor was vacuum pumped to a vacuum degree of -0.07 MPa (gauge pressure), held at this vacuum degree for 10 minutes, then refilled with nitrogen gas and the nitrogen gas replacement was repeated 10 times.
(5) Nitrogen gas was introduced into the reactor in step (4) for protection, and the resulting mixture was heated at 96°C for 46 hours, then filtered to separate the chips from water, and the resulting chips were rinsed with water at 95°C, then vacuum dried at 105°C for 15 hours to obtain polyamide 56 resin.

### Example 3

(a) The polyamide 56 chips prepared in Preparation example 1 and deoxidized deionized water were added to a reactor at a mass ratio of the chips to deoxidized deionized water of 1 : 12. The air in the reactor was replaced with nitrogen gas as follow: the reactor was vacuum pumped to a vacuum degree of -0.09 MPa (gauge pressure), held at this vacuum degree for 10 minutes, and then refilled with nitrogen gas and the nitrogen gas replacement was repeated 10 times.
(b) Nitrogen gas was introduced into the reactor in step (a) for protection, and the resulting mixture was heated at 95°C for 55 hours, and then filtered to separate the chips from water, and the resulting chips were rinsed with hot water at 95°C, then vacuum dried at 105°C for 15 hours to obtain polyamide 56 resin.

### Example 4

(1) Under a nitrogen gas condition, 1,5-pentanediamine, adipic acid and water were mixed uniformly at a molar ratio of 1,5-pentanediamine to adipic acid of 1.05 : 1 to prepare a 60 wt.% (where the percentage is the mass percentage of the nylon salt solution) of nylon salt solution; the nylon salt solution was sampled and diluted to a concentration of 10 wt.%, at which point the pH value was 7.98.
(2) 1200 g of the nylon salt solution and 1200 ppm of sodium hypophosphite were added to a polymerization reactor and heated to raise the pressure inside the reaction system to 2.0 MPa in 1.5 hours, then the pressure was maintained for 3 hours by degassing, at the end of the pressure maintaining process, the temperature of the reaction system was 243°C, then the pressure inside the reaction system was depressurized to 0.005 MPa (gauge pressure) in 1 hour, after the completion of depressurization, the temperature of the reaction system was 290°C. The reaction system was vacuumized for 30 minutes and maintained at a vacuum degree of -0.08 MPa, the temperature of the reaction system after vacuumization was 290°C to obtain polyamide 56 melt.
(3) The melt obtained in step (2) was discharged and subjected to strand pelletizing under water cooling at 20°C to obtain polyamide 56 chips.
(4) The chips were vacuum dried at 105°C for 15 hours to obtain polyamide 56 resin.

### Example 5

(1) Under a nitrogen gas condition, 1,5-pentanediamine, adipic acid and water were mixed uniformly at a molar ratio of 1,5-pentanediamine to adipic acid of 1.05 : 1 to prepare a 60 wt.% (where the percentage is the mass percentage of the nylon salt solution) of nylon salt solution; the nylon salt solution was sampled and diluted to a concentration of 10 wt.%, at which point the pH value was 7.98.
(2) 1200 g of the nylon salt solution and 2400 ppm of sodium hypophosphite were added to a polymerization reactor and heated to raise the pressure inside the reaction system to 2.0 MPa in 1.5 hours, then the pressure was maintained for 3 hours by degassing, at the end of the pressure maintaining process, the temperature of the reaction system was 243°C, then the pressure inside the reaction system was depressurized to 0.005 MPa (gauge pressure) in 1 hour, after the completion of depressurization, the temperature of the reaction system was 290°C. The reaction system was vacuumized for 30 minutes and maintained at a vacuum degree of -0.08 MPa, the temperature of the reaction system after vacuumization was 290°C to obtain polyamide 56 melt.
(3) The melt obtained in step (2) was discharged and subjected to strand pelletizing under water cooling at a water temperature of 20°C to obtain polyamide 56 chips.
(4) The chips were vacuum dried at 105°C for 15 hours to obtain polyamide 56 resin.

### Example 6

(1) Under a nitrogen gas condition, 1,5-pentanediamine, adipic acid and water were mixed uniformly at a molar ratio of 1,5-pentanediamine to adipic acid of 1.05 : 1 to prepare a 60 wt.% (where the percentage is the mass percentage of the nylon salt solution) of nylon salt solution; the nylon salt solution was sampled and diluted to a concentration of 10 wt.%, at which point the pH value was 7.98.
(2) 1200 g of the nylon salt solution and 85 ppm of sodium hypophosphite were added to a polymerization reactor and heated to raise the pressure inside the reaction system to 2.0 MPa in 1.5 hours, then the pressure was maintained for 3 hours by degassing, at the end of the pressure maintaining process, the temperature of the reaction system was 243°C, then the pressure inside the reaction system was depressurized to 0.005 MPa (gauge pressure) in 1 hour, after the completion of depressurization, the temperature of the reaction system was 290°C. The reaction system was vacuumized for 30 minutes and maintained at a vacuum degree of -0.08 MPa, the temperature of the reaction system after vacuumization was 290°C to obtain polyamide 56 melt.
(3) The melt obtained in step (2) was discharged and subjected to strand pelletizing under water cooling at a water temperature of 20°C to obtain polyamide 56 chips.
(4) The chips were vacuum dried at 105°C for 15 hours to obtain polyamide 56 resin.

The polyamide resins obtained in Examples 1 to 6 were tested for relative viscosity, water extractables content, content of hypophosphite in term of P, crystallization temperature, half-crystallization time, acid resistance and yellow index. The test results are shown in Table 1.

**Table 1**

| **Resins** | **Relative viscosity** | **Water extractabl es content of (wt.%)** | **Content of P (ppm)** | **Crystalliz ation temperat ure (°C)** | **Half-cryst allization time (s)** | **Acid resistance** | **Yellow Index** |
|---|---|---|---|---|---|---|---|
| Example 1 | 2.75 | 0.46 | 80 | 212.32 | 62 | Grade 5 | 4.10 |
| Example 2 | 2.75 | 0.30 | 60 | 210.15 | 67 | Grade 5 | 3.83 |
| Example 3 | 2.75 | 0.17 | 71 | 207.37 | 78 | Grade 5 | 3.30 |
| Example 4 | 2.76 | 0.87 | 575 | 214.96 | 54 | Grade 3 | 4.50 |
| Example 5 | 2.78 | 0.85 | 1086 | 213.22 | 57 | Grade 3 | 4.47 |
| Example 6 | 2.76 | 0.91 | 27 | 218.72 | 52 | Grade 4 | 4.51 |

Polyamide compositions were prepared using the polyamide resins of Examples 1 to 6, glass fibers, and antioxidants as raw materials, respectively. The formulas of the compositions are shown in Table 2.

The compositions were prepared as follows:
Polyamide resins, glass fibers, and antioxidants were used as raw materials and mixed in a twin-screw extruder, and then the strands extruded from the twin-screw extruder were cooled in water as a cooling medium to a temperature below the melting point of polyamide and pelletized to give polyamide resin compositions, wherein the twin-screw extruder adopted a seven-zone heating mode, with the temperatures from zone 1 to zone 7 being successively 250°C, 260°C, 260°C, 280°C, 270°C, 270°C and 270°C. The die temperature was 260°C, the screw speed was 480 r/min, and the D/L ratio of the twin-screw extruder was 1 : 40.

The obtained polyamide resin compositions were dried at 110°C for 5 hours, then subjected to injection molding under the following conditions: barrel temperature of 280°C and mold surface temperature of 110°C, with sample thickness of 3 mm. Injection molding was carried out continuously for 50 times, and mold fouling on the high gloss surface of the mold was observed and evaluated by 5 grades, wherein, the amount of the mold fouling decreases sequentially from grade 1 to grade 5, grade 1 being the worst as a large amount of mold fouling occurs, and grade 5 being the best as no obvious mold fouling occurs. The test results of the injection molded samples are shown in Table 2.

**Table 2**

| **Compositions** | **Resins** | **Glass fibers** | | | **Antioxidants** | **Tensile strength (MPa)** | **Bending strength (MPa)** | **Floating fiber on the surface of the molded products** | **Evaluation of mold fouling** |
|---|---|---|---|---|---|---|---|---|---|
| | | **Length (mm)** | **Aspect ratio** | **Parts by weight** | | | | | |
| Example 7 | 100 parts of resin of Example 1 | 4.5 | 385 | 28 parts | 0.2 parts of antioxidant 1098 | 210 | 307 | No | 5 |
| Example 8 | 100 parts of resin of Example 2 | 3 | 290 | 27 parts | 0.2 parts of antioxidant 1098 | 207 | 298 | No | 5 |
| Example 9 | 100 parts of resin of Example 3 | 4.5 | 395 | 28 parts | 0.2 parts of antioxidant 1010 | 197 | 285 | A small amount | 4 |
| Example 10 | 100 parts of resin of Example 4 | 4.5 | 400 | 28 parts | 0.2 parts of antioxidant 1098 | 215 | 310 | No | 5 |
| Example 11 | 100 parts of resin of Example 5 | 4.5 | 405 | 28 parts | 0.2 parts of antioxidant 1098 | 213 | 312 | No | 5 |
| Example 12 | 100 parts of resin of Example 6 | 4.5 | 395 | 29 parts | 0.2 parts of antioxidant 1098 | 215 | 314 | No | 5 |
| Comparative example 1 | 100 parts of resin of Example 1 | 0.8 | 70 | 28 parts | 0.2 parts of antioxidant 1098 | 194 | 293 | No | 5 |
| Comparative example 2 | 100 parts of resin of Example 6 | 0.8 | 68 | 28 parts | 0.2 parts of antioxidant 1098 | 200 | 295 | No | 5 |

Finally, it should be noted that the above examples are intended only to illustrate the technical solutions of the present disclosure, rather than limiting thereto. Although the present disclosure has been described in detail with reference to the foregoing examples, those skilled in the art should understand that modifications may still be made to the technical solutions set forth in the foregoing examples, or equivalent substitutions may be made for some or all of the technical features thereof, and these modifications or substitutions will not make the essence of the corresponding technical solutions depart from the scope of the technical solutions in the examples of the present disclosure.

## Claims

1. A polyamide resin, wherein the polyamide resin comprises a diamine structural unit and a dicarboxylic acid structural unit, has a water extractables content of 0.7 wt.% or less, and a hypophosphite content of 10 ppm to 500 ppm in terms of P.

2. The polyamide resin according to claim 1, wherein
90 mol% or more of the dicarboxylic acid structural unit is derived from adipic acid, and 90 mol% or more of the diamine structural unit is derived from 1,5-pentanediamine; and/or,
hypophosphite comprises alkali metal hypophosphites and alkaline-earth metal hypophosphites, preferably comprises any one of sodium hypophosphite, potassium hypophosphite, calcium hypophosphite and magnesium hypophosphite or a combination of two or more thereof; and/or,
the polyamide resin has a water extractables content of 0.05 wt.% or more, preferably 0.1 wt.% or more, more preferably 0.2 wt.% or more and even more preferably 0.25 wt.% or more; and/or,
the polyamide resin has a hypophosphite content of 10 ppm to 300 ppm, and preferably 10 ppm to 200 ppm, in terms of P; and/or,
the polyamide resin has a relative viscosity of 1.8 to 4.0, preferably 2.2 to 3.5, and more preferably 2.4 to 3.3; and/or,
the polyamide resin has a yellow index of less than 7, and preferably less than 5.

3. A composition comprising the polyamide resin according to claim 1 or 2, wherein the composition comprises the following components in parts by weight:
100 parts of the polyamide resin and 10 to 70 parts of glass fiber.

4. The composition according to claim 3, wherein the glass fiber has a length to diameter ratio of (2 ~8 00) : 1, and preferably (200 ~ 650) : 1; and/or,
the glass fiber has a length of 3 mm to 12 mm, and preferably 3 mm to 8 mm; and/or,
the composition comprises any one of an antioxidant, a nucleating agent, a lubricant, a flame retardant, a coupling agent, a heat stabilizer, a light stabilizer, an antistatic agent, a ultraviolet absorbent, and a colorant, or a combination of two or more of the above.

5. A method for preparing a polyamide resin, wherein the method comprises the following steps:
S1, preparing a nylon salt solution in an inactive gas atmosphere;
S2, heating the nylon salt solution to raise pressure of the nylon salt solution reaction system to a pressure of 0.5 to 2.5 MPa, and maintaining the pressure by degassing for 0.5 to 4 hours, and then depressurizing to reduce the pressure inside the reaction system to 0 to 0.7 MPa, then vacuumizing the reaction system to a vacuum degree of -0.01 to -0.08 MPa, to obtain a polyamide melt; and
S3, discharging the polyamide melt, carrying out strand pelletizing to obtain polyamide chips.

6. The method according to claim 5, wherein
in step S1, 1,5-pentanediamine and dicarboxylic acid are used for preparing the nylon salt solution at a molar ratio of (1 ~ 1.1) : 1; and/or,
in step S2, the reaction system has a temperature of 232°C to 260°C at the end of pressure maintenance; and/or,
in step S2, the reaction system has a temperature of 240°C to 295°C at the end of depressurization; and/or,
in step S2, the reaction system has a temperature of 250°C to 290°C after vacuumization; and/or,
in step S2, the vacuum degree is maintained for 11 to 75 minutes after vacuumization; and/or,
in step S3, the strand pelletizing is carried out in water at a water temperature of 15°C to 50°C.

7. The method according to claim 5, wherein it further comprises the following steps:
S4, mixing the polyamide chips with water in a reactor to obtain a mixture, then replacing the air in the reactor with an inactive gas; and
S5, in an inactive gas atmosphere, heating and filtering the mixture, rinsing and/or drying the polyamide chips to obtain the polyamide resin.

8. The method according to claim 7, wherein
in step S4, the reactor is selected from a continuous extraction column and a batch reactor; and/or
in step S4, the air in the reactor is replaced by using a vacuum pump to vacuumize the reactor and then refilling it with nitrogen gas or an inert gas; and/or,
in step S4, an operation for replacing the air in the reactor is repeated twice or more; and/or,
in step S4, the water is deionized water, and preferably deionized water undergone deoxygenation treatment; and/or,
in step S4, the water is used in a mass of 1 fold or more of that of the polyamide chips, preferably 2 folds or more of that of the polyamide chips, for example 1 to 12 folds of that of the polyamide chips, 2 to 10 folds of that of the polyamide chips, and 2 to 6 folds of that of the polyamide chips; and/or,
in step S4 and step S5, the inactive gas comprises one or two of argon gas and helium gas.

9. The method according to claim 7, wherein
in step S5, the mixture is heated for 4 to 50 hours, preferably 8 to 45 hours; and/or,
in step S5, the mixture is heated at a temperature of 80°C to 140°C, preferably 85°C to 120°C; and/or,
in step S5, the rinsing is carried out with hot water at a temperature of 50°C to 100°C; and/or,
in step S5, the drying is carrying out by one or more selected from vacuum drying, freeze-drying, airflow drying, microwave drying, infrared drying and high-frequency drying.

10. Use of the polyamide resin of claim 1 or 2 or the composition of claim 3 or 4 in engineering plastics.
